# EUROPEAN PATENT APPLICATION

(11) **EP 4 755 595 A1**
(43) Date of publication of application: **10.06.2026**
(21) Application number: 24851489.5
(22) Date of filing: 08.07.2024
(51) Int. Cl.: B25J 15/08

(54) **CONVEYOR DEVICE**

(30) Priority: 04.08.2023 JP 2023127854
(71) Applicant: HITACHI HIGH-TECH CORPORATION, Tokyo 105-6409 (JP)
(72) Inventor: OKAMOTO, Haruki, Tokyo 100-8280 (JP); NINOMIYA, Eisaku, Tokyo 105-6409 (JP); ZUSHI, Iori, Tokyo 105-6409 (JP); ODAKA, Atsushi, Tokyo 105-6409 (JP); SHIRAKAWA, Kazuhiro, Tokyo 105-6409 (JP)
(74) Representative: MERH-IP Matias Erny Reichl Hoffmann Patentanwälte PartG mbB
(86) International application number: PCT/JP2024/024653
(87) International publication number: WO 2025/033060

(57) **Abstract**

It is an object of the present invention to provide a transport device, which allows, with compact structure, transportation of the transport object with a variety of protrusion. Accordingly, the present invention provides a transport device for transporting a transport object having a protrusion that protrudes from a flat base, and includes a plurality of grip units for gripping the transport object while having the grip unit pressed against a base surface of the transport object. At least one of the grip units has a shape to cover at least a part of a side surface of the protrusion without covering a leading end surface of the protrusion. For example, the shape corresponds to a notch shape along the side surface of the protrusion in a circumferential direction.

## Description

### Technical Field

This invention relates to a transport device.

### Background Art

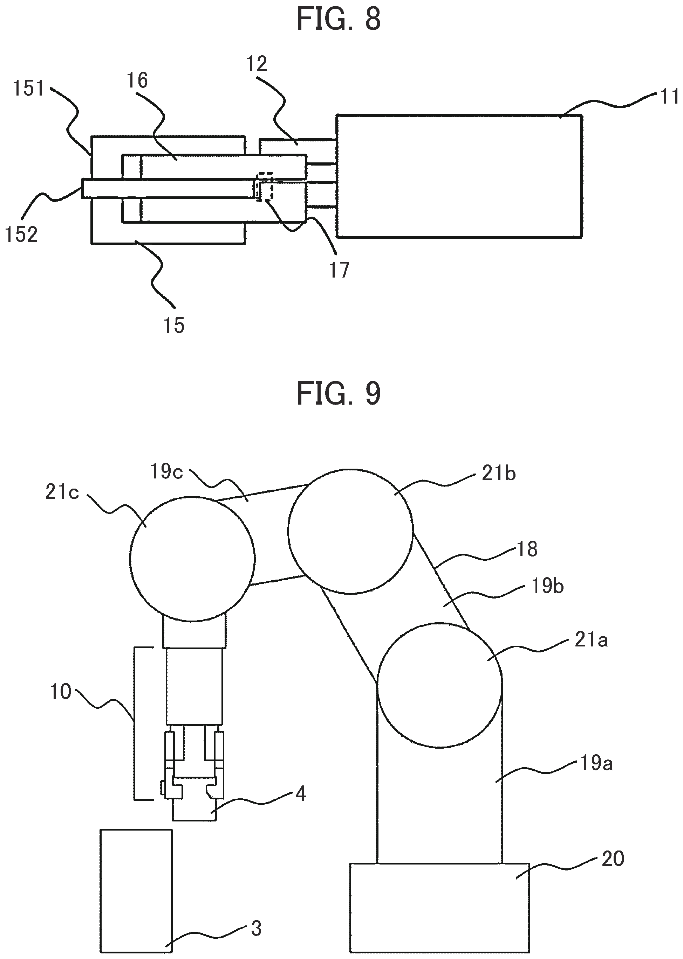

Consumables used for medical analyzers and the like need periodical replacement. It is therefore desirable to automate the replacement operation, for example, consumable transporting operations. Patent Literature 1 discloses the technique for automating the transporting operation, specifically, the sample processing system for transporting a container by a robot having a recess portion and a finger portion with a fingertip. Patent Literature 1 discloses operations, upon transportation of the container, for gripping a fringe portion formed at the lower part of the flange with the fingertip while accommodating the flange formed on the upper edge of the cylindrical container in the recess portion (paragraph 0046, Fig. 9).

### Citation List

### Patent Literature

Patent Literature 1: Japanese Unexamined Patent Application Publication No. 2017-30095

### Summary of Invention

### Technical Problem

The technique as disclosed in Patent Literature 1 is configured to cover a part of the container as a transport object, ranging from a leading end (surface) of the flange (protrusion) to a rear end (back surface) across the side surface. This may increase the size of the finger portion mechanism depending on the size and the shape of the flange.

It is an object of the present invention to provide a transport device with compact structure, which allows transportation of the transport object having a variety of protrusion.

### Solution to Problem

In order to solve the above problems, the present invention provides a transport device for transporting a transport object having a protrusion that protrudes from a flat base, and the transport device includes a plurality of grip units for gripping the transport object while having the grip unit pressed against a base surface of the transport object. At least one of the grip units has a shape to cover at least a part of a side surface of the protrusion without covering a leading end surface of the protrusion.

### Advantageous Effects of Invention

According to the present invention, it is possible to provide a transport device with compact structure, which allows transportation of the transport object having a variety of protrusion. Objects, configurations, and effects other than the above will be apparent from the description of the following embodiments.

### Brief Description of Drawings

Fig. 1 is a front view illustrating an entire structure of a transport device according to a first embodiment.
Fig. 2 is a perspective view illustrating a state in which transport objects are arranged on a tray.
Fig. 3 is a side view illustrating a state in which a hand according to the first embodiment grips the transport object.
Fig. 4 is a front view illustrating a state in which the hand according to the first embodiment grips the transport object.
Fig. 5 is a perspective view illustrating a state in which the transport objects are mounted on a mount unit.
Fig. 6 is a perspective view illustrating a state in which one of a plurality of transport objects arranged on the storage unit is gripped.
Fig. 7 is a perspective view illustrating a state in which a hand according to a second embodiment grips a transport object.
Fig. 8 is a side view illustrating a state in which the hand according to the second embodiment grips the transport object.
Fig. 9 is a side view illustrating a structure of a transportation unit of a transport device according to a third embodiment.

### Description of Embodiments

The following describes an embodiment of the transport device according to the present invention with reference to the drawings. In the drawings used for the specification, like reference numerals designate identical or corresponding components, and therefore such components may not be further described here.

Transport objects to be transported by the transport device of the present embodiment are consumables mainly used for medical analyzers. The transport object has a protrusion which protrudes from a flat base. Generally, the protrusion having its position, shape, and size diversified may be complicatedly shaped, or structurally weak. Upon transportation of the transport object, the transport device according to the embodiment is structured to grip a base surface of the transport object without coming into contact with the protrusion. The following describes transport devices for transporting two different types of transport objects as a first embodiment and a second embodiment, respectively.

### First Embodiment

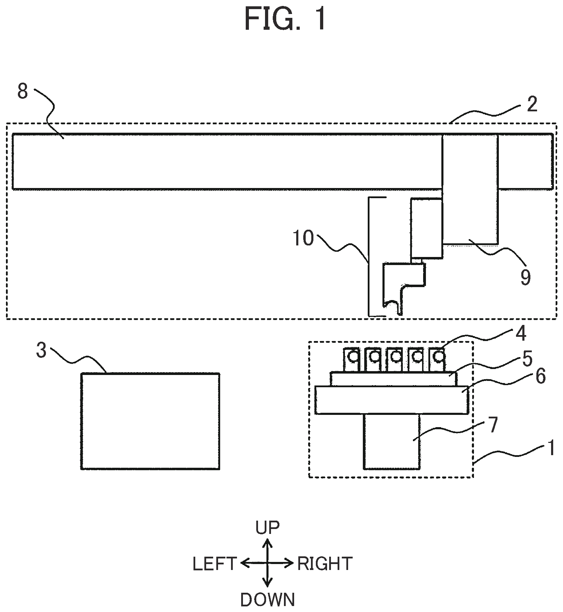

The following describes a transport device according to a first embodiment of the present invention with reference to Fig. 1 to Fig. 6. In the first embodiment, an ion-selective electrode (ISE) is exemplified as the transport object. The ion-selective electrode is provided with a not shown ion-sensitive membrane in a case of the ion-selective electrode. A protrusion of the ion-selective electrode is an internal electrode which outputs a potential to be generated by the ion-sensitive membrane in the case.

Fig. 1 is a front view illustrating an entire structure of the transport device according to the first embodiment. As illustrated in Fig. 1, the transport device includes a transportation unit 2. The transportation unit 2 transports a transport object 4 stored in a storage unit 1 to a mount unit 3.

As illustrated in Fig. 1, the transportation unit 2 includes a transportation actuator 8, an air slider 9 provided on the transportation actuator 8, and a hand 10 attached to the air slider 9. The hand 10 can be moved not only in a left-right direction by the transportation actuator 8, but also in an up-down direction by the air slider 9. The air slider 9 may be constituted by any other mechanism such as an actuator without being limited to the pneumatic mechanism so long as it allows the hand 10 to be moved in the up-down direction.

As illustrated in Fig. 1, the storage unit 1 includes a tray 5 on which the transport object 4 can be mounted, a tray base 6 which supports the tray 5 detachably, and a tray actuator 7 connected to the tray base 6. The user of the transport device arranges the transport objects 4 on the tray 5, and then mounts the tray 5 on the tray base 6. The tray actuator 7 moves the tray base 6 in the depth (front-rear) direction as illustrated in Fig. 1, thereby to adjust the position at which the hand 10 of the transportation unit 2 grips the transport object 4 arranged on the tray 5.

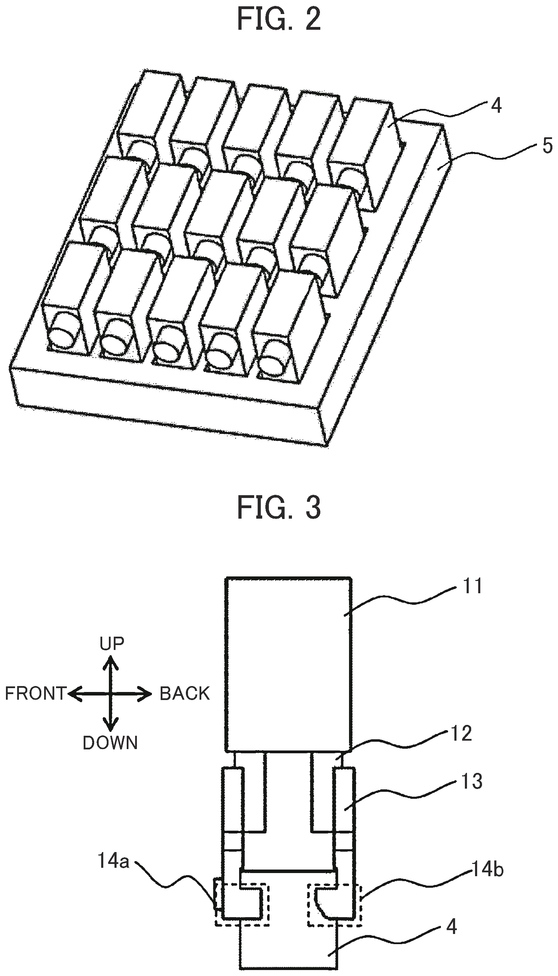

Fig. 2 is a perspective view illustrating a state in which the transport objects are arranged on the tray. The tray 5 has a plurality of recess portions formed in the upper surface. The transport objects 4 are engaged with those recess portions, respectively. This allows the user to easily align the transport objects 4 on the tray, and hardly causes misalignment owing to vibration after the alignment. In the present embodiment, the number of the recess portions (the number of the transport objects 4 to be mounted) is 15 in the matrix of 3-column × 5-row. The number and arrangement of the recess portions are not limited to those described above. If the number of columns is 1, the positional adjustment of the transport objects 4 in the depth direction as illustrated in Fig. 1 is not necessary. Accordingly, the tray actuator 7 is not required. The cross-section of the recess portion of the tray 5 is not limited to the rectangular shape, but may be other shapes such as a circular shape and a rhomboid shape. An outline shape of the case for the transport object 4 is not limited to the cuboidal shape, but may be other shape such as a cylindrical shape and a quadrangular prism shape.

Fig. 3 is a side view illustrating a state in which the hand according to the first embodiment grips the transport object. The hand 10 is mainly comprised of a chuck 11, a connection unit 12, and a grip unit 13 (claw). The chuck 11 is a mechanism such as an air chuck and a motor chuck for opening and closing operations, and fixed to the above-described air slider 9. The two connection units 12 are present, that is, a front connection unit and a rear connection unit, which are attached to a not shown movable portion of the chuck 11. Accordingly, the front and rear connection units 12 are operated for opening and closing operations (come closer and move apart) as the chuck 11 is operated to be opened and closed. The two grip units 13 are also present, that is, a front grip unit and a rear grip unit, which are attached to the front and the rear connection units 12, respectively. In response to operations of the connection units 12, the front and rear grip units 13 are also operated for opening and closing operations (come closer and move apart). For example, the front grip unit 13 (front side) moves backward to be pressed against the front surface of a base 42 of the transport object 4. The rear grip unit 13 (back side) is moved forward to be pressed against the back surface of the base 42 of the transport object 4.

That is, the transport object 4 is held between the two oppositely positioned grip units 13, so that the transport object 4 is gripped. When releasing the transport object 4 from the gripped state, the two grip units 13 move in the direction reversely to the gripping direction.

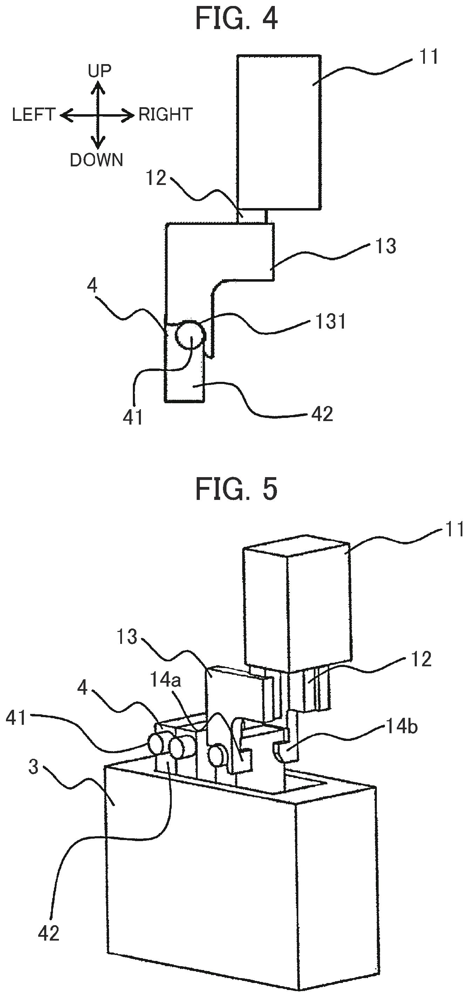

Fig. 4 is a front view illustrating a state in which the hand according to the first embodiment grips the transport object. As a protrusion 41 is formed on the front side of the transport object 4, the front grip unit 13 is required to avoid the contact with the protrusion 41. In the front grip unit 13, a notch shape 131 is formed to a lower side of a first surface as a vertical surface opposite to the base surface to be pressed for gripping the transport object 4, thereby to cover at least a part of an outer peripheral side surface of the protrusion 41 without covering a leading end surface (front end surface) of the protrusion 41. Accordingly, the front grip unit 13 does not have to pass over the front side of the protrusion 41. This allows the entire structure of the hand 10 including the front grip unit 13 to be compact.

Similar effects can be obtained by forming a through hole in the grip unit 13 instead of the notch shape 131 because the grip unit 13 has a curved surface along the outer peripheral side surface of the protrusion 41 in the circumferential direction. However, the notch shape 131 allows the grip unit 13 to be compact more easily. Preferably, the notch shape 131 covers an area of the outer peripheral side surface of the protrusion 41 in the circumferential direction, which corresponds to an angle less than 180 degrees. Even in the case of a large external diameter of the protrusion 41, the notch shape 131 does not have to be enlarged more than necessary. This may make the entire structure of the hand 10 including the front grip unit 13 further compact. In the case where the outer peripheral side surface of the protrusion 41 is structurally weak, preferably, the front grip unit 13 is pressed against the front surface of the base 42 to grip the transport object 4 while holding the notch shape 131 separated from the outer peripheral side surface of the protrusion 41.

The following describes the flow of transport operations. The hand 10 is horizontally (left-right direction) moved to a position above the transport object 4 stored in the storage unit 1 by an operation of the transportation actuator 8. Then the hand 10 is moved downward by an operation of the air slider 9 to the height at which the transport object 4 is positioned. Upon completion of downward movement of the hand 10, the chuck 11 is closed, and the grip unit 13 grips the transport object 4.

After the hand 10 is moved upward by the operation of the air slider 9 while the transport object 4 is gripped by the grip unit 13, the transportation actuator 8 operates the hand 10 to move horizontally (left-right direction) to the position above the mount unit 3. Thereafter, when the hand 10 moves downward to the position at the predetermined height, the chuck 11 is opened to release the transport object 4 from the state gripped by the grip unit 13.

Upon completion of the above-described operations, the transport object 4 is mounted on the mount unit 3.

Fig. 5 is a perspective view illustrating a state in which the transport objects are mounted on the mount unit. The mount unit 3 as illustrated in Fig. 5 has a rectangular recess formed in the upper surface, in which the plurality of transport objects 4 are arranged in the left-right direction. The shape of the recess, however, is not limited to the one as illustrated in Fig. 5. At the time of releasing the transport object 4 from the state gripped by the grip unit 13, a gap may be generated between the released transport object 4 and the adjacently arranged transport object 4. Accordingly, the grip unit 13 of the present embodiment is moved horizontally (left-right direction) by the operation of the transportation actuator 8 such that the transport object 4 is brought closer to another transport object 4 to thereby align the transport objects 4 on the mount unit 3.

If the outer peripheral side surface of the protrusion 41 of the transport object 4 is made of metal, in other words, structurally strong, the transport object 4 may be brought closer to another transport object 4 by moving the grip unit 13 horizontally (left-right direction) while pressing the notch shape 131 against the outer peripheral side surface of the protrusion 41. If the outer peripheral side surface of the protrusion 41, which is structurally weak is brought into contact with the notch shape 131, the protrusion 41 may be damaged. Accordingly, it is not preferable to align the transport objects 4 by means of the outer peripheral side surface of the protrusion 41 and the notch shape 131. In the case where the protrusion 41 is formed only on the front side of the transport object 4, it is difficult to align the transport objects 4 smoothly through pressure application only to the front side. Consequently, the front and the rear grip units 13 have engagement members 14a, 14b (engagement portions), respectively, each on the second surface as the vertical surface perpendicular to the first surface as described above. If the grip unit 13 is horizontally (left-right direction) moved while pressing the engagement members 14a, 14b against the transport object 4, the transport object 4 can be smoothly brought closer to another transport object 4. Even in the case where only one of two oppositely positioned grip units 13 has the engagement member, the transport objects 4 can be aligned to a certain extent. However, the structure in which both grip units have the respective engagement members allows smoother alignment of the transport objects 4.

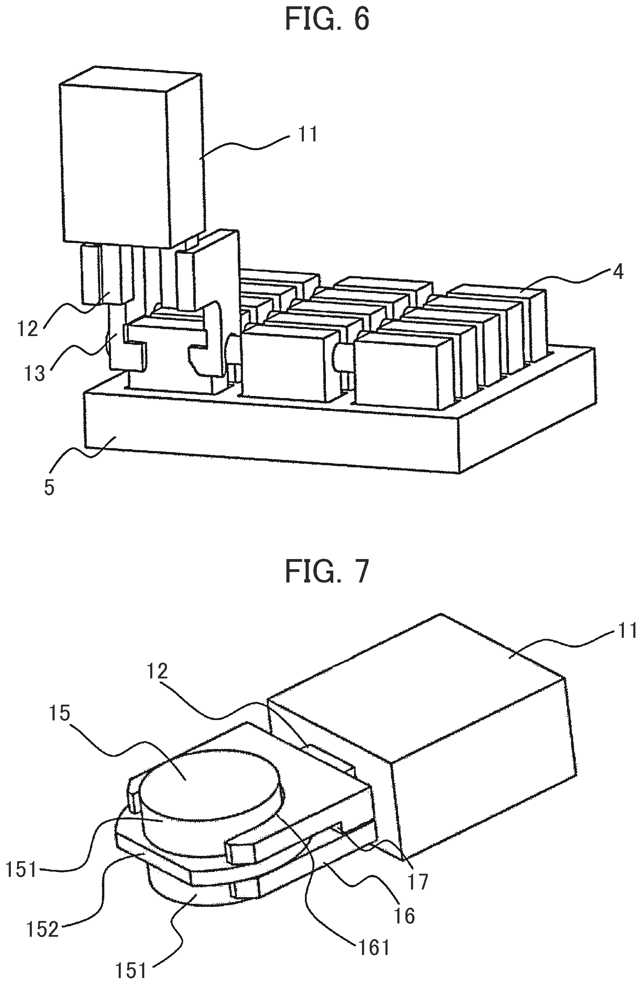

Fig. 6 is a perspective view illustrating a state in which one of a plurality of transport objects arranged on the storage unit is gripped. Although the transport object 4 has the protrusion 41 only on the front side thereof, if the interval between the transport object 4 and the one adjoining to the back is narrow, the notch shape 131 is formed in the grip unit 13 on the rear side along the side surface of the protrusion 41 of the other transport object 4 in the circumferential direction. It is therefore possible to press the rear grip unit 13 against the back surface of the base 42 of the transport object 4 while avoiding the interference with the protrusion 41 of the other transport object 4 adjoining to the back. In other words, more transport objects 4 can be stored in the storage unit 1 (tray 5), resulting in improved transport efficiency. Provision of a through hole in the grip unit 13 instead of the notch shape 131 may increase the moving distance between the front and rear grip units 13 in the front-rear direction. Not only that, if the transport objects 4 are arranged in the front-rear direction at narrow intervals as illustrated in Fig. 6, the interference occurs between the grip unit 13 and the protrusion 41.

According to the transport device according to the present embodiment, it is possible to transport the transport object with a variety of forwardly protruding protrusion, with compact structure. If the transport object 4 in the gripped state is likely to tilt, another grip unit may be provided on at least one side in the left-right direction in addition to the two front and rear grip units 13 which are oppositely positioned.

### Second Embodiment

The following describes a transport device according to a second embodiment of the present invention with reference to Fig. 7 and Fig. 8. Fig. 7 is a perspective view illustrating a state in which a hand according to a second embodiment grips a transport object. Fig. 8 is a side view illustrating a state in which the hand according to the second embodiment grips the transport object. In the second embodiment, a flow cell for immunoassay is exemplified as the transport object. The flow cell (transport object 15) includes a flange portion 152 that constitutes a flat base, and a protrusion 151 that protrudes from the flange portion 152 in the up-down direction. The flange portion 152 is made of metal, and the protrusion 151 is made of resin. Therefore, in the second embodiment, the flange portion 152 is held between two oppositely positioned grip units 16 in the up-down direction, thereby to grip the transport object 15.

The hand 10 according to the second embodiment is mainly comprised of the chuck 11, the connection units 12, and the grip units (claws) 16. Similar to the first embodiment, the chuck 11 is fixed to the air slider 9. The connection unit 12 includes two units, that is, an upper connection unit and a lower connection unit, which are attached to not shown movable portions of the chuck 11, respectively. As the chuck 11 is operated to be opened and closed, the upper and the lower connection units 12 are operated for opening and closing operations (come closer and move apart). The grip unit 16 also includes two units, that is, an upper grip unit and a lower grip unit, which are attached to the upper and the lower connection units 12, respectively. In conjunction with operations of the connection units 12, the upper and the lower grip units 16 are operated for opening and closing operations (come closer and move apart). For example, the upper grip unit 16 moves downward to be pressed against the upper surface of the flange portion 152 of the transport object 15. The lower grip unit 16 moves upward to be pressed against the lower surface of the flange portion 152 of the transport object 15. When releasing the transport object 15 from the gripped state, the two grip units 16 move in the direction reversely to the gripping direction.

Each of the upper and the lower grip units 16 in the present embodiment has a notch shape 161 formed in a leading end of a first surface as a horizontal surface opposite to the flange portion 152 to be pressed for gripping the transport object 15. Those grip units are structured to cover at least a part of the outer peripheral side surface of the protrusion 151 without covering the upper and lower end surfaces of the protrusion 151. Accordingly, the upper and lower grip units 16 are not required to pass over the upper and lower sides of the protrusion 151. This allows the entire structure of the hand including the grip units 16 to be made compact.

As the outer peripheral side surface of the protrusion 151 of the present embodiment is made of resin, it is preferable to grip the transport object 4 by pressing the upper and lower grip units 16 against the upper and lower surfaces of the metal flange portion 152, respectively, while holding the notch shape 161 separated from the outer peripheral side surface of the protrusion 151. In this case, it is not preferable to use the outer peripheral side surface of the protrusion 151 and the notch shape 161 for alignment of the transport object 15 after it is mounted on the mount unit. The upper or the lower grip unit 16 of the present embodiment has a stepped portion at the side of the connection unit 12 on the lower surface or the upper surface to form an engagement wall 17 (engagement portion) on a second surface as a vertical surface perpendicular to the first surface as described above. It is possible to horizontally align the transport object 15 after being released from the gripped state, by horizontally moving the grip units 16 while pressing the engagement wall 17 against the side surface of the flange portion 152.

According to the present embodiment, since the grip units 16 for gripping the transport object 15 having the protrusion 151 that protrudes in the up-down direction need not to have a shape that passes over the upper surface or the lower surface of the protrusion 151, it is possible to transport the transport object with compact structure.

### Third Embodiment

The following describes a transport device according to a third embodiment of the present invention with reference to Fig. 9. Fig. 9 is a side view illustrating a structure of a transportation unit of the transport device according to the third embodiment. As illustrated in Fig. 9, unlike the respective foregoing embodiments, the transportation unit 2 of the transport device according to the third embodiment includes a robot device 18 and a hand 10.

The robot device 18 is mainly comprised of robot arms 19a to 19c, a robot base 20 and joints 21a to 21c, and capable of three-dimensionally moving the hand 10 attached to the leading end. The robot device 18 illustrated in Fig. 9 is a vertical articulated robot. However, any other type of robot such as SCARA robot and a cartesian robot may be employed so long as it can control the hand 10 three-dimensionally.

Even in the existence of an obstacle in an area from the storage unit 1 to the mount unit 3, the transport device according to the present embodiment allows transportation of the transport object while avoiding the obstacle by controlling the hand 10 three-dimensionally.

The present invention is not limited to the above-described embodiments, and further includes various modifications. For example, the above-described embodiments have been described in detail in order to facilitate the understanding of the present invention, and the present invention is not necessarily limited to those including all of the described configurations. In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

### List of Reference Signs

1: storage unit
2: transportation unit
3: mount unit
4: transport object
5: tray
6: tray base
7: tray actuator
8: transportation actuator
9: air slider
10: hand
11: chuck
12: connection unit
13: grip unit
14a, 14b: engagement member
15: transport object
16: grip unit
17: engagement wall
18: robot device
19a - 19c: robot arm
20: robot base
21a - 21c: joint
41: protrusion
42: base
131: notch shape
151: protrusion
152: flange portion
161: notch shape

## Claims

1. A transport device for transporting a transport object having a protrusion that protrudes from a flat base, the transport device comprising
a plurality of grip units for gripping the transport object while having the grip unit pressed against a base surface of the transport object, wherein
at least one of the grip units has a shape to cover at least a part of a side surface of the protrusion without covering a leading end surface of the protrusion.

2. The transport device according to claim 1, wherein
the shape corresponds to a notch shape along the side surface of the protrusion in a circumferential direction.

3. The transport device according to claim 2, wherein
the grip unit grips the transport object in a state where the notch shape is separated from the side surface of the protrusion.

4. The transport device according to claim 3, wherein
the transport object is an ion-selective electrode, and
the protrusion is an internal electrode that protrudes from a case of the ion-selective electrode.

5. The transport device according to claim 2, wherein
in the side surface of the protrusion in the circumferential direction, an area covered with the notch shape corresponds to an angle less than 180 degrees.

6. The transport device according to claim 1, wherein
two of the plurality of grip units are oppositely positioned,
one of the two oppositely positioned grip units is pressed against the base surface of the transport object, and
the other of the two oppositely positioned grip units is pressed against the other base surface of the transport object.

7. The transport device according to claim 6, wherein
the one of the two oppositely positioned grip units has a notch shape along the side surface of the protrusion of the transport object in the circumferential direction, and
the other of the two oppositely positioned grip units has a notch shape along a side surface of a protrusion of another transport object in the circumferential direction, arranged adjacent to the transport object.

8. The transport device according to claim 1, wherein
the grip unit includes a first surface as a vertical surface opposite to the base surface, and a second surface as a vertical surface perpendicular to the first surface, and
the grip unit brings the transport object closer to another adjacently positioned transport object by pressing an engagement member, which is formed on the second surface, against the transport object.
